# EUROPÄISCHE PATENTSCHRIFT

(11) **EP 2 562 108 B1**
(45) Veröffentlichungstag und Bekanntmachung des Hinweises auf die Patenterteilung: **10.07.2019**
(21) Anmeldenummer: 12179219.6
(22) Anmeldetag: 03.08.2012
(51) Int. Cl.: B21C 47/16, B65H 16/02, B65H 20/16, B65G 21/20, B21C 47/34, H01F 41/02, B65H 20/06

(54) **Vorrichtung zum Transportieren von mehrlagig übereinander angeordnetem, dünnschichtigem Bandmaterial aus einem amorphen Material**
Device for transporting multi-layered stacked thin film strip material from an amorphous material
Dispositif de transport de matériaux en bande à couche fine agencés les uns sur les autres en plusieurs couches et composés d'un matériau amorphe

(30) Priorität: 22.08.2011 DE 102011081337
(43) Veröffentlichungstag der Anmeldung: 27.02.2013
(73) Patentinhaber: Heinrich Georg GmbH Maschinenfabrik, 57223 Kreuztal (DE)
(72) Erfinder: Friedrich, Jost, 57271 Hilchenbach (DE); Hrncal, Miloslav, 57223 Kreuztal-Krombach (DE); Weyand, Klaus, 57223 Kreuztal-Krombach (DE)
(74) Vertreter: advotec.

(56) Entgegenhaltungen:
- EP-A1- 0 461 829
- EP-A1- 2 287 866
- WO-A1-91/12960

## Beschreibung

Die Erfindung betrifft eine Vorrichtung zum Transportieren von mehrlagig übereinander angeordnetem, dünnschichtigem Bandmaterial aus einem amorphen Material von mindestens einer mit einem Coil aus mehrlagigem Bandmaterial bestücktem Abwickelhaspel zu einer Schere o.dgl. Schneidevorrichtung zum Zuschneiden des Bandmaterials zu Blechen für die Herstellung von Transformatorenkernen.

Zur Herstellung von Transformatorenkernen, die in der Regel aus einer Vielzahl von einzelnen Blechen aus Metall gebildet sind, werden in einer Anlage das Bandmaterial von einem Coil bzw. einer Vorratsrolle kontinuierlich abgerollt, über Transportvorrichtungen mit einer zwischen den Transportvorrichtungen vorgesehenen Ausgleichsschlaufe einer Schneidevorrichtung zugeführt und die einzelnen Bleche nach dem Schneiden auf einem Stapeltisch abgestapelt. Für den Transport des Bandmaterials weisen die Transportvorrichtungen beispielsweise jeweils einen Rollenvorschub auf, bei dem zwischen zwei Rollen (eine obere und eine untere Rolle) das Bandmaterial eingespannt ist.

Um die Leistungsfähigkeit der Transformatoren zu erhöhen, werden zwischenzeitlich anstelle von herkömmlichen Bandmaterialien aus bekannten Metallen Bandmaterialien aus einem amorphen Material verwendet, wodurch die Transformatoren längere Standzeiten haben, eine geringere Verlustleistung auftritt und auch weniger Geräusche (Brummen) auftreten. Dieses Bandmaterial weist eine sehr geringe Dicke von etwa 0,025 mm auf, so dass ein entsprechendes Coil mit etwa 5 Lagen des Bandmaterials versehen ist. Vorteilhaft wird das Bandmaterial von mehreren, beispielsweise 3 Coils gleichzeitig abgerollt, übereinander abgelegt und der Schneidevorrichtung zugeführt.

Eine Transportvorrichtung mit Rollenvorschub ist hierbei ungeeignet, da das von den 3 Coils abgewickelte Bandmaterial aus insgesamt 15 Lagen zwischen der oberen und unteren Rolle der Transportvorrichtung eingespannt ist und die Rollen lediglich Kontakt zur obersten sowie zur untersten Lage des Bandmaterials haben, wobei die Kraftübertragung nur über die Reibung von Lage zu Lage erfolgt. Mit jeder Lage wächst zudem der Radius bezogen auf die Mitte der Antriebsrolle, d.h., der Radius wird größer und somit auch die Umfangslänge beim nächsten Radius. Dies alles kann zu einem Versatz der Lagen von der äußeren Lage zur mittleren Lage von 1 bis 3 mm führen.

Die WO 91/12960 A1 beschreibt ein mehrschichtiges Band aus amorphem Metall, das zur Herstellung einer Transformatorspule vorgesehen ist, sowie eine Vorrichtung und ein Verfahren zur Herstellung des Bandes. Das Band ist dabei aus zwei Schichten mit jeweils mindestens 2 nebeneinander angeordneten Streifen aus amorphem Metall gebildet, wobei die beiden Streifen ungleiche Breiten aufweisen, wobei die beiden Schichten derart zueinander angeordnet sind, dass sich die breiteren Streifen überlappen, und wobei zwischen den Schichten ein flexibles polymeres Bindemittel vorgesehen ist.

Der Erfindung liegt die Aufgabe zugrunde, eine Vorrichtung der angegebenen Gattung zu schaffen, mit der eine absolute Längengenauigkeit sämtlicher Lagen von Bandmaterial zum Schneiden und sämtlicher geschnittener Bleche gewährleistet ist.

Diese Aufgabe wird erfindungsgemäß durch eine Vorrichtung mit den Kennzeichnungsmerkmalen des Patentanspruchs 1 gelöst.

Zweckmäßige Weiterbildungen der Erfindung sind in den Unteransprüchen gekennzeichnet.

Die erfindungsgemäße Vorrichtung weist ein Förderband mit an dessen Enden angeordneten Umlenkrollen auf, wobei eine der beiden Umlenkrollen mittels eines Motors angetrieben wird. Unterhalb des oberen Trums eines umlaufenden Gurtes des Förderbandes ist mindestens ein Magnet vorgesehen, durch den die einzelnen Lagen des Bandmaterials in ihrer Position zueinander fest zusammengehalten werden. Der Magnet bzw. die Magnete sorgen dafür, dass es zu keinen Verschiebungen der einzelnen Lagen zueinander kommt und dass dadurch eine absolute Längengenauigkeit gewährleistet ist.

Um ein Magnetfeld zu schaffen, das für einen ordnungsgemäßen Zusammenhalt der Lagen von Bandmaterial sorgt, ist ein besonders starker Magnet bzw. sind besonders starke Magnete vorgesehen. Dazu besteht der Magnet bzw. bestehen die Magnete vorzugsweise aus einer Neodym-Eisen-Borverbindung.

Der Magnet kann bzw. die Magnete können sich über die Länge des oberen Trums des Gurtes des Förderbandes zwischen den Umlenkrollen erstrecken, wobei die Magnete auch mehrere in Reihe hintereinander angeordnete Einzelmagnete sein können, die sich über die Länge des oberen Trums des Gurtes des Förderbandes zwischen den Umlenkrollen erstrecken.

Vorzugsweise sind für einen optimalen Zusammenhalt der einzelnen Lagen zwei Reihen von Magneten bzw. Magnetreihen hintereinander angeordneter Einzelmagnete parallel nebeneinander vorgesehen, die in eine längsverlaufende Nut einer Leiste eingesetzt sind, wobei die Öffnung der Nut zum oberen Trum des Gurtes des Förderbandes gerichtet ist.

Zwischen den beiden benachbarten Magneten bzw. Magnetreihen hintereinander angeordneter Einzelmagnete sowie zwischen den Seiten der längsverlaufenden Nut und jeder Reihe von Magneten bzw. Magnetreihen hintereinander angeordneter Einzelmagnete sind Stahlplatten zur Kanalisierung der Magnetlinie und zum Leiten derselben in Richtung des Bandmaterials angeordnet.

Zwischen dem oberen Trum des Gurtes des Förderbandes und dem Magnet bzw. den Magneten ist ein Gleittisch vorgesehen, der das relativ dünnschichtige Bandmaterial von unten abstützt.

Vorteilhaft können im Bereich der Ränder des oberen Trums des Gurtes des Förderbandes seitliche Führungsleisten für das Bandmaterial vorgesehen sein, die für einen ordnungsgemäßen Geradeauslauf des Bandmaterials sorgen.

Vorzugsweise sind die seitlichen Führungsleisten zur Anpassung an die Breite des Bandmaterials verstellbar ausgebildet.

Im Bereich der hinteren Umlenkrolle kann eine Einlaufrinne mit seitlichen Führungen für das Bandmaterial vorgesehen sein, wobei die seitlichen Führungen zur Anpassung an die Breite des Bandmaterials sinnvollerweise ebenfalls verstellbar ausgebildet sind.

Nachfolgend wird anhand der Zeichnungen eine bevorzugte Ausführungsform der Vorrichtung näher erläutert.

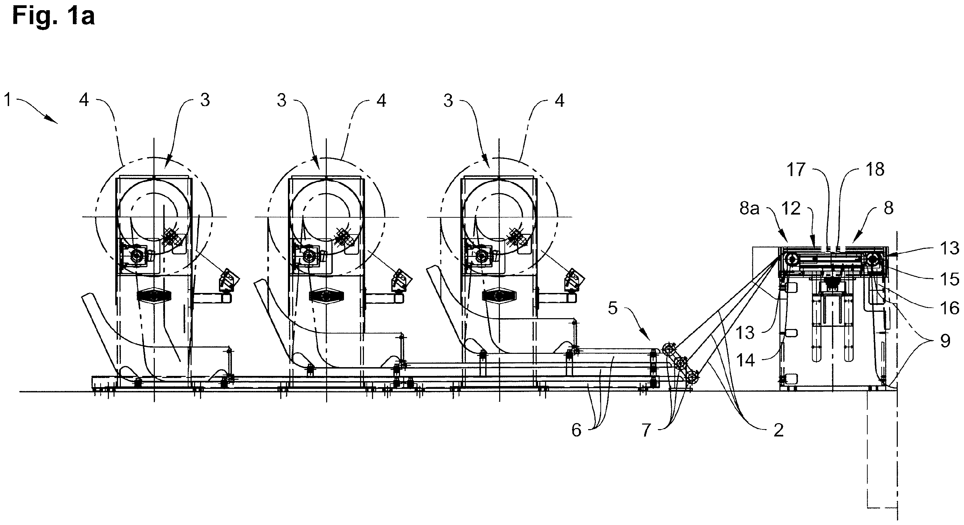

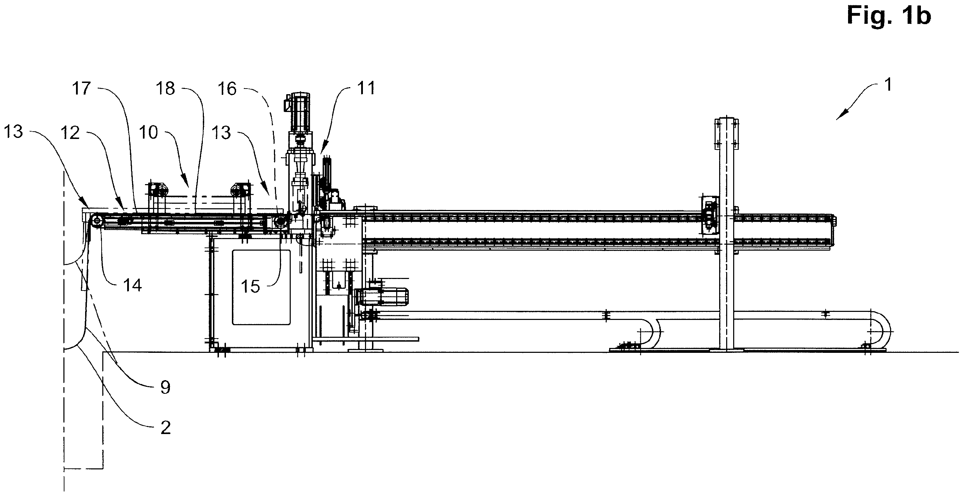

Es zeigen
- **Fig. 1a** und **1b**: eine Seitenansicht einer Anlage zur Herstellung von Blechen für Transformatorenkerne mit zwei Vorrichtungen zum Transportieren des Bandmaterials,

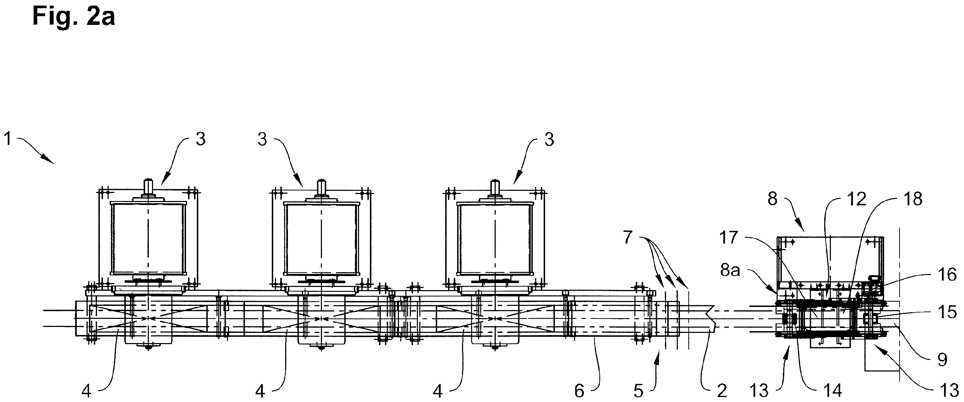

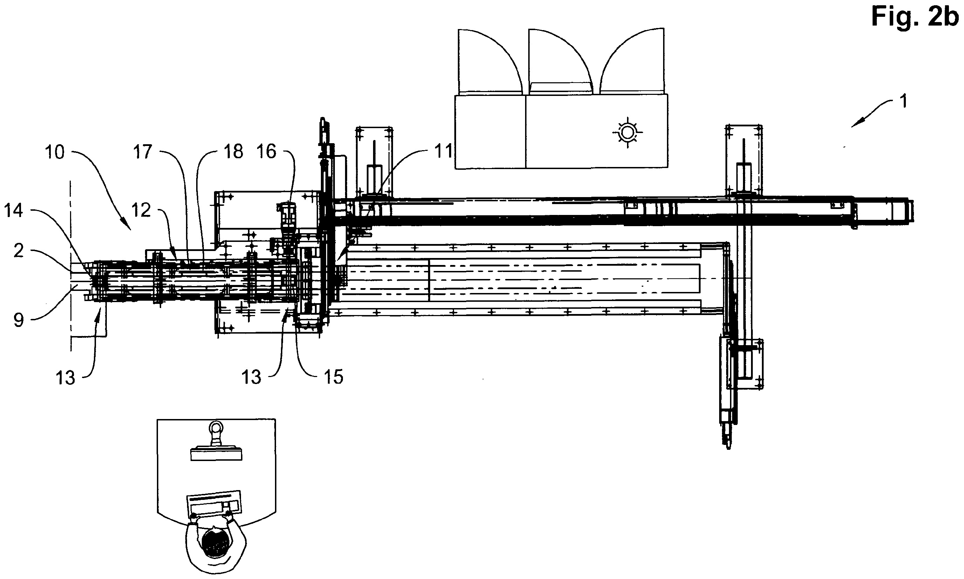

- **Fig. 2a** und **2b**: eine Draufsicht der Anlage nach den **Fign. 1a** und **1b****,**

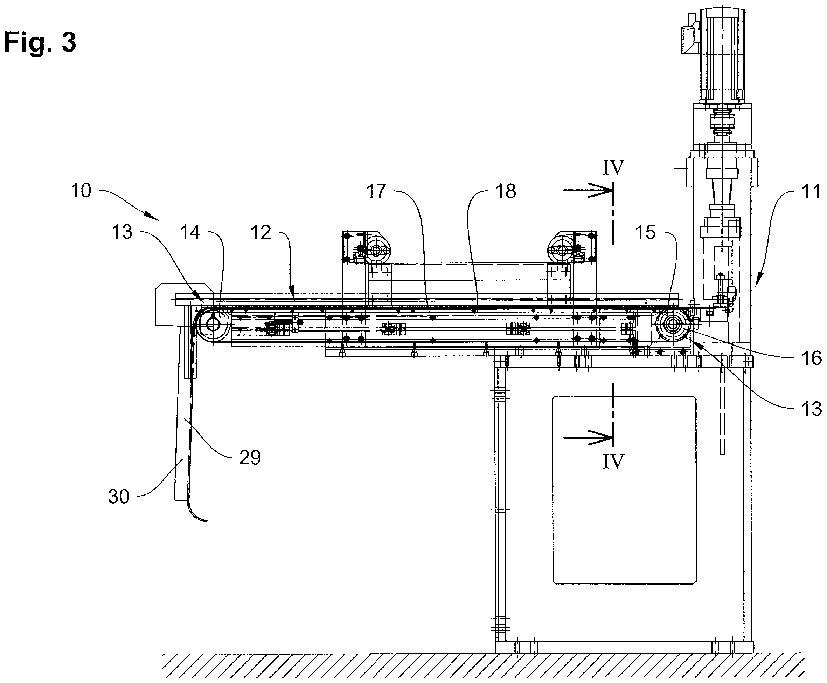

- **Fig. 3**: eine vergrößerte Seitenansicht einer der Vorrichtungen mit Schere zum Zuschneiden des Bandmaterials und

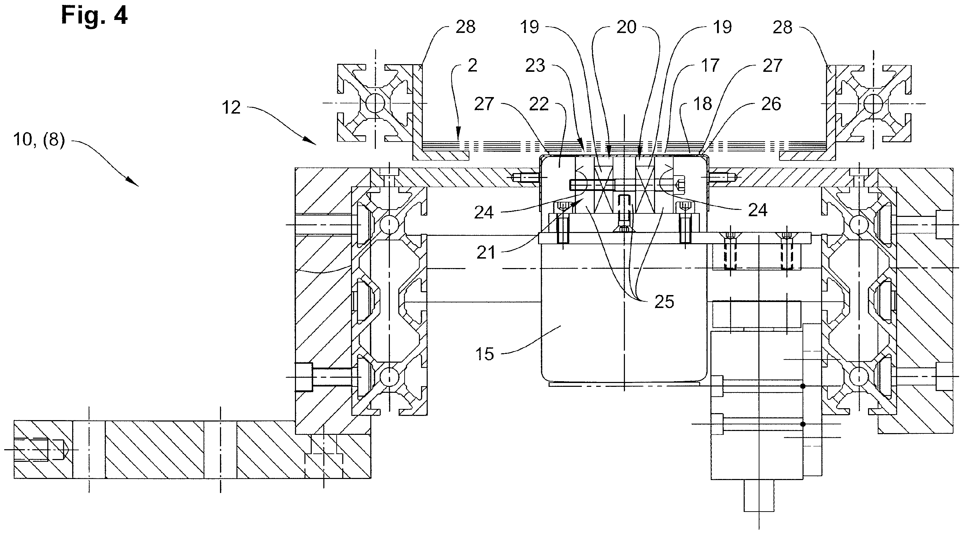

- **Fig. 4**: einen Teilschnitt nach der Linie IV-IV in **Fig. 3****.**

Die in den **Figuren** dargestellte Anlage 1 ist zur Herstellung von Blechen aus einem mehrlagig übereinander angeordneten, dünnschichtigen Bandmaterial 2 aus einem amorphen Material zur Erstellung von Transformatorenkernen vorgesehen, wobei die Transformatorenkerne aus einer Vielzahl von einzelnen Blechen gebildet sind. Dabei wird in der Anlage 1 das Bandmaterial 2 von mindestens einem auf einer Abwickelhaspel 3 angeordneten Coil bzw. einer Vorratsrolle 4 mit mehrlagigem Bandmaterial 2 kontinuierlich abgerollt. Bei dem in den **Figuren** dargestellten Ausführungsbeispiel sind z.B. drei Abwickelhaspeln 3 mit jeweils einem Coil 4 vorgesehen, wobei jedes Coil 4 beispielsweise fünf Lagen des Bandmaterials 2 aufweist.

Am vorderen Ende 5 der hintereinander angeordneten Abwickelhaspeln 3 wird das in Schienen 6 geführte Bandmaterial 2 eines jeden Coils 4 über Umlenkrollen 7 einer ersten Vorrichtung 8 zum Transportieren des Bandmaterials 2 zugeführt, wobei das gesamte Bandmaterial 2 am hinteren Ende 8a der Vorrichtung 8 zusammengeführt und aufeinander abgelegt wird. Das gesamte Bandmaterial 2 wird hinter der ersten Vorrichtung 8 in einer Ausgleichsschlaufe 9 geführt und einer zweiten Vorrichtung 10 zum Transportieren des Bandmaterials 2 zugeführt, mit der das Bandmaterial 2 wiederum einer Schere o.dgl. Schneidevorrichtung 11 zugeführt wird. Die einzelnen Bleche werden nach dem Schneiden auf einer Ablagevorrichtung abgelegt (nicht dargestellt).

Die zuvor erwähnte Ausgleichsschlaufe 9 sorgt dafür, dass während des Herstellungsprozesses immer genügend Bandmaterial frei zur Verfügung steht.

Beide Vorrichtungen 8, 10 weisen jeweils ein Förderband 12 mit an dessen Enden 13 angeordneten Umlenkrollen 14, 15 auf, wobei eine der beiden Umlenkrollen 15 mittels eines Motors 16 angetrieben wird. Unterhalb des oberen Trums 17 eines umlaufenden Gurtes 18 des Förderbandes 12 ist mindestens ein Magnet 19 vorgesehen, der bzw. die dafür sorgt bzw. sorgen, dass die einzelnen Lagen des Bandmaterials 2 in ihrer Position zueinander fest zusammengehalten werden.

Zur Erzeugung eines ausreichenden Magnetfeldes für den ordnungsgemäßen Zusammenhalt sämtlicher Lagen des Bandmaterials 2 ist ein besonders starker Magnet 19 bzw. sind besonders starke Magnete 19 vorgesehen, der bzw. die beispielsweise aus einer Neodym-Eisen-Borverbindung besteht bzw. bestehen.

Um den Zusammenhalt sämtlicher Lagen des Bandmaterials 2 weiter zu verstärken, erstreckt sich der Magnet 19 bzw. erstrecken sich die Magnete 19 über die Länge des oberen Trums 17 des Gurtes 18 des Förderbandes 12 zwischen den Umlenkrollen 14, 15. Dabei können die Magnete 19 mehrere in Reihe hintereinander angeordnete Einzelmagnete 19 sein, die sich über die Länge des oberen Trums 17 des Gurtes 18 des Förderbandes 12 zwischen den Umlenkrollen 14, 15 erstrecken.

Zwei Reihen 20 von Magneten 19 bzw. Magnetreihen 20 hintereinander angeordneter Einzelmagnete 19, die parallel nebeneinander vorgesehen sind, sorgen für eine weitere Verstärkung des Zusammenhalts. Dabei sind die Magnete 19 in eine längsverlaufende Nut 21 einer Leiste 22 eingesetzt, wobei die Öffnung 23 der Nut 21 zum oberen Trum 17 des Gurtes 18 des Förderbandes 12 gerichtet ist.

Zur Kanalisierung der Magnetlinie in Richtung der Lagen des Bandmaterials 2 sind zwischen den beiden benachbarten Magneten 19 bzw. Magnetreihen 20 hintereinander angeordneter Einzelmagnete 19 sowie zwischen den Seiten 24 der längsverlaufenden Nut 21 und jeder Reihe 20 von Magneten 19 bzw. Magnetreihen 20 hintereinander angeordneter Einzelmagnete 19 Stahlplatten 25 vorgesehen.

Für eine saubere Auflage des Bandmaterials 2 sorgt ein zwischen dem oberen Trum 17 des Gurtes 18 des Förderbandes 12 und dem Magnet 19 bzw. den Magneten 19 vorgesehener Gleittisch 26.

Im Bereich der Ränder 27 des oberen Trums 17 des Gurtes 18 des Förderbandes 12 sind vorzugsweise seitliche Führungsleisten 28 für das Bandmaterial 2 vorgesehen, die für einen sauberen und geraden Lauf desselben sorgen. Zur Anpassung der Führungsleisten 28 an die Breite des Bandmaterials 2 können dieselben verstellbar ausgebildet sein.

Bei der zweiten Vorrichtung 10 kann für einen sauberen und geraden Einlauf des Bandmaterials 2 aus der Ausgleichsschlaufe 9 in die Vorrichtung 10 im Bereich der hinteren Umlenkrolle 14 eine Einlaufrinne 29 mit seitlichen Führungen 30 vorgesehen sein, wobei die Führungen 30 vorzugsweise zur Anpassung an die Breite des Bandmaterials 2 verstellbar ausgebildet sein sollten.

Obwohl bei dem in den **Figuren** dargestellten Ausführungsbeispiel drei Abwickelhaspeln 3 dargestellt sind, versteht es sich von selbst, dass auch mehr oder weniger Abwickelhaspeln 3 vorgesehen sein können und die Vorrichtungen 8, 10 auch einen ordnungsgemäßen Betrieb beim Transport von mehr oder weniger als 15 Lagen von Bandmaterial 2 gewährleisten.

## Patentansprüche

1. Vorrichtung (8, 10) zum Transportieren von mehrlagig übereinander angeordnetem, dünnschichtigem Bandmaterial (2) aus einem amorphen Material von mindestens einer mit einem Coil (4) aus mehrlagigem Bandmaterial (2) bestücktem Abwickelhaspel (3) zu einer Schere o.dgl. Schneidevorrichtung (11) zum Zuschneiden des Bandmaterials (2) zu Blechen für die Herstellung von Transformatorenkernen,
**dadurch gekennzeichnet,**
**dass** die Vorrichtung (8, 10) ein Förderband (12) mit an dessen Enden (13) angeordneten Umlenkrollen (14, 15) aufweist, wobei eine der beiden Umlenkrollen (15) mittels eines Motors (16) angetrieben wird, und dass unterhalb des oberen Trums (17) eines umlaufenden Gurtes (18) des Förderbandes (12) mindestens ein Magnet (19) vorgesehen ist, durch den die einzelnen Lagen des Bandmaterials (2) in ihrer Position zueinander fest zusammengehalten werden, wobei der Magnet (19) bzw. die Magnete (19) aus einer Neodym-Eisen-Borverbindung besteht bzw. bestehen.

2. Vorrichtung nach Anspruch 1,
**dadurch gekennzeichnet,**
**dass** der Magnet (19) bzw. die Magnete (19) sich über die Länge des oberen Trums (17) des Gurtes (18) des Förderbandes (12) zwischen den Umlenkrollen (14, 15) erstreckt bzw. erstrecken.

3. Vorrichtung nach Anspruch 1,
**dadurch gekennzeichnet,**
**dass** die Magnete (19) mehrere in Reihe hintereinander angeordnete Einzelmagnete sind, die sich über die Länge des oberen Trums (17) des Gurtes (18) des Förderbandes (12) zwischen den Umlenkrollen (14, 15) erstrecken.

4. Vorrichtung nach einem der Ansprüche 1 bis 3,
**dadurch gekennzeichnet,**
**dass** zwei Reihen (20) von Magneten (19) bzw. Magnetreihen (20) hintereinander angeordneter Einzelmagnete (19) parallel nebeneinander vorgesehen sind, die in eine längsverlaufende Nut (21) einer Leiste (22) eingesetzt sind, wobei die Öffnung (23) der Nut (21) zum oberen Trum (17) des Gurtes (18) des Förderbandes (12) gerichtet ist.

5. Vorrichtung nach Anspruch 4,
**dadurch gekennzeichnet,**
**dass** zwischen den beiden benachbarten Magneten (19) bzw. Magnetreihen (20) hintereinander angeordneter Einzelmagnete (19) sowie zwischen den Seiten (24) der längsverlaufenden Nut (21) und jeder Reihe (20) von Magneten (19) bzw. Magnetreihen (20) hintereinander angeordneter Einzelmagnete (19) Stahlplatten (25) zur Kanalisierung der Magnetlinie vorgesehen sind.

6. Vorrichtung nach einem der Ansprüche 1 bis 5,
**dadurch gekennzeichnet,**
**dass** zwischen dem oberen Trum (17) des Gurtes (18) des Förderbandes (12) und dem Magnet (19) bzw. den Magneten (19) ein Gleittisch (26) vorgesehen ist.

7. Vorrichtung nach einem der Ansprüche 1 bis 6,
**dadurch gekennzeichnet,**
**dass** im Bereich der Ränder (27) des oberen Trums (17) des Gurtes (18) des Förderbandes (12) seitliche Führungsleisten (28) für das Bandmaterial (2) vorgesehen sind.

8. Vorrichtung nach Anspruch 7,
**dadurch gekennzeichnet,**
**dass** die seitlichen Führungsleisten (28) zur Anpassung an die Breite des Bandmaterials (2) verstellbar ausgebildet sind.

9. Vorrichtung nach einem der Ansprüche 1 bis 8,
**dadurch gekennzeichnet,**
**dass** im Bereich der hinteren Umlenkrolle (14) eine Einlaufrinne (29) mit seitlichen Führungen (30) für das Bandmaterial (2) vorgesehen ist.

10. Vorrichtung nach Anspruch 9,
**dadurch gekennzeichnet,**
**dass** die seitlichen Führungen (30) zur Anpassung an die Breite des Bandmaterials (2) verstellbar ausgebildet sind

## Claims

1. A device (8, 10) for transporting thin-layered web material (2) of an amorphous material, arranged in several layers one over another, from at least one decoiling reel (3), equipped with a coil (4) of multilayered web material (2), to a cutter or suchlike cutting device (11) for cutting the web material (2) into sheets for the production of transformer cores,
**characterized in that**
the device (8, 10) has a belt conveyor (12) with deflection rollers (14, 15) arranged at its ends (13), wherein one of the two deflection rollers (15) is driven by means of a motor (16), and that beneath the upper strand (17) of a revolving belt (18) of the belt conveyor (12) at least one magnet (19) is provided, by which the individual layers of the web material (2) are securely held together in their position to each other, wherein the magnet (19) or respectively the magnets (19) consist(s) of a neodymium iron boron compound.

2. The device according to claim 1,
**characterized in that**
the magnet (19) or respectively the magnets (19) extend(s) over the length of the upper strand (17) of the belt (18) of the belt conveyor (12) between the deflection rollers (14, 15).

3. The device according to claim 1,
**characterized in that**
the magnets (19) are several individual magnets arranged one behind the other, which extend over the length of the upper strand (17) of the belt (18) of the belt conveyor (12) between the deflection rollers (14, 15).

4. The device according to one of claims 1 to 3,
**characterized in that**
two rows (20) of magnets (19) or respectively magnet rows (20) of individual magnets (19) arranged one behind the other are provided parallel adjacent to each other, which are inserted into a longitudinally-running groove (21) of a strip (22), wherein the opening (23) of the groove (21) is directed towards the upper strand (17) of the belt (18) of the belt conveyor (12).

5. The device according to claim 4,
**characterized in that**
steel plates (25) for channelling the magnet line are provided between the two adjacent magnets (19) or respectively magnet rows (20) of individual magnets (19) arranged one behind the other, and between the sides (24) of the longitudinally-running groove (21) and each row (20) of magnets (19) or respectively magnet rows (20) of individual magnets (19) arranged one behind the other.

6. The device according to one of claims 1 to 5,
**characterized in that**
a sliding table (26) is provided between the upper strand (17) of the belt (18) of the belt conveyor (12) and the magnet (19) or respectively the magnets (19).

7. The device according to one of claims 1 to 6,
**characterized in that**
lateral guide strips (28) for the web material (2) are provided in the region of the edges (27) of the upper strand (17) of the belt (18) of the belt conveyor (12).

8. The device according to claim 7,
**characterized in that**
the lateral guide strips (28) are constructed so as to be adjustable for adapting to the width of the web material (2).

9. The device according to one of claims 1 to 8,
**characterized in that**
an infeed channel (29) with lateral guides (30) for the web material (2) is provided in the region of the rear deflection roller (14).

10. The device according to claim 9,
**characterized in that**
the lateral guides (30) are constructed so as to be adjustable for adapting to the width of the web material (2).

## Revendications

1. Dispositif (8, 10) pour transporter un matériau en bande mince (2) disposé en plusieurs couches les unes sur les autres et constitué d'un matériau amorphe d'au moins un dérouleur (3) équipé d'une bobine (4) de matériau en bande multicouche (2) vers une cisaille ou un dispositif de coupe (11) similaire pour couper le matériau en bande (2) en feuilles pour la production de noyaux de transformateurs,
**caractérisé en ce que**
le dispositif (8, 10) comprend une band transporteuse (12) dont les extrémités (13) comprennent des poulies de renvoi (14, 15), l'une des deux poulies de renvoi (15) étant entraînée par un moteur (16), et au moins un aimant (19) est prévu sous un tronçon supérieur (17) d'une courroie de circulation (18) de la bande transporteuse (12), au moyen duquel les couches différentes du matériau en bande (2) sont maintenues fermement ensemble dans leur position l'une par rapport à l'autre, l'aimant (19) ou les aimants (19) étant constitué(s) d'un composé néodyme-fer-bore.

2. Dispositif selon la revendication 1,
**caractérisé en ce que**
l'aimant (19) ou les aimants (19) s'étend/s'étendent sur la longueur du tronçon supérieur (17) de la courroie (18) de la bande transporteuse (12) entre les poulies de renvoi (14, 15).

3. Dispositif selon la revendication 1,
**caractérisé en ce que**
les aimants (19) sont une pluralité d'aimants individuels disposés en série les uns derrière les autres, qui s'étendent sur la longueur du tronçon supérieur (17) d'une courroie (18) de la bande transporteuse (12) entre les poulies de renvoi (14, 15).

4. Dispositif selon l'une quelconque des revendications 1 à 3,
**caractérisé en ce que**
deux séries (20) d'aimants (19) ou des séries (20) d'aimants (19) individuels disposés l'un derrière l'autre sont prévues parallèlement l'une à côté de l'autre et sont insérées dans une rainure (21) longitudinale d'un rail (22), l'ouverture (23) de la rainure (21) étant orientée vers tronçon supérieur (17) de la courroie (18) de la bande transporteuse (12).

5. Dispositif selon la revendication 4,
**caractérisé en ce que**
des plaques d'acier (25) sont prévues entre les aimants (19) adjacents ou les séries (20) d'aimants (19) individuels disposés l'un derrière l'autre de même qu'entre les côtés (24) de la rainure (21) longitudinale et chaque série (20) d'aimants (19) ou des aimants (19) individuel disposés l'un derrière l'autre pour canaliser la ligne magnétique.

6. Dispositif selon l'une quelconque des revendications 1 à 5,
**caractérisé en ce qu'**
une table de glissement (26) est prévue entre le tronçon supérieur (17) de la courroie (18) de la bande transporteuse (12) et le(s) aimant(s).

7. Dispositif selon l'une quelconque des revendications 1 à 6,
**caractérisé en ce que**
des rails de guidage (28) latéraux pour le matériau en bande (2) sont prévus dans la zone des bords (27) du tronçon supérieur (17) de la courroie (18) de la bande transporteuse (12).

8. Dispositif selon la revendication 7,
**caractérisé en ce que**
les rails de guidage (28) latéraux sont réglables pour s'adapter à la largeur du matériau en bande (2).

9. Dispositif selon l'une quelconque des revendications 1 à 8,
**caractérisé en ce qu'**
un canal d'entrée (29) avec des guides latéraux (30) pour le matériau en bande(2) est prévu dans la zone de la poulie de renvoi arrière (14).

10. Dispositif selon la revendication 9,
**caractérisé en ce que**
les guides latéraux (30) sont réglables pour s'adapter à la largeur du matériau en bande (2).
